# EUROPEAN PATENT SPECIFICATION

(11) **EP 2 445 285 B1**
(45) Date of publication and mention of the grant of the patent: **12.04.2017**
(21) Application number: 09846088.4
(22) Date of filing: 28.12.2009
(51) Int. Cl.: H04W 72/00, H04W 72/12

(54) **PROCESSING OF DYNAMIC SCHEDULING INFORMATION BASED ON MULTICAST BROADCAST SERVICE**
VERARBEITUNG VON DYNAMISCHEN PLANUNGSINFORMATIONEN AUF DER BASIS EINES MULTICAST/BROADCAST-DIENSTES
TRAITEMENT D'INFORMATION DE PLANIFICATION DYNAMIQUE BASÉ SUR UN SERVICE DE DIFFUSION/MULTIDIFFUSION

(30) Priority: 17.06.2009 CN 200910149083
(43) Date of publication of application: 25.04.2012
(73) Proprietor: ZTE Corporation, Shenzhen, Guangdong 518057 (CN)
(72) Inventor: MA, Zijiang, Shenzhen Guangdong 518057 (CN); HU, Zhenping, Shenzhen Guangdong 518057 (CN); XIE, Fang, Shenzhen Guangdong 518057 (CN); LI, Dapeng, Shenzhen Guangdong 518057 (CN); DU, Zhongda, Shenzhen Guangdong 518057 (CN)
(74) Representative: Quinterno, Giuseppe
(86) International application number: PCT/CN2009/076136
(87) International publication number: WO 2010/145174

(56) References cited:
- EP-A1- 2 262 290
- EP-A2- 1 467 586
- WO-A1-2007/052968
- WO-A1-2007/129597
- WO-A2-2008/153302
- CN-A- 101 262 626
- CN-A- 101 296 102
- "3rd Generation Partnership Project; Technical Specification Group Radio Access Network; Introduction of the Multimedia Broadcast Multicast Service (MBMS) in the Radio Access Network (RAN); Stage 2 (Release 8)", 3GPP STANDARD; 3GPP TS 25.346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 March 2009 (2009-03-01), pages 1-73, XP050368058,
- MCC TF160: "Documentation of TSO and recovering errorneously removed IE in ASP", 3GPP DRAFT; R5-071433, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Kobe; 20070508, 8 May 2007 (2007-05-08), XP050185250, [retrieved on 2007-05-08]

## Description

### Field of the Invention

The present invention relates to the communication field, and in particular to a method, an apparatus and a user equipment for processing dynamic scheduling information based on multicast/broadcast service of the kinds defined in the preamble of annexed claims 1, 8 and 11.

### Background of the Invention

Presently, mobile data multimedia services and high bandwidth multimedia services, such as, video conference, TV broadcast, VOD, advertisement, network education, and interactive games, etc., not only satisfy the persistently increasing demands by mobile users, but also offer new service growth pole to mobile operators. These mobile data multimedia services require a plurality of user to be able to receive a same data at same time, thus compared to general service, the mobile data multimedia services are characterized by large data volume, long duration, time delay sensitive, etc.

In order to effectively take advantage of mobile network resources, the 3rd Generation Partnership Project (3GPP) put forward Multimedia Broadcast Multicast Service (MBMS), which is the technology for delivering data from one data resource to a plurality of targets, so as to realize the share of network (including core network and access network) resources and elevate the utilization ratio of network resources (especially air interface resource). The MBMS defined by the 3GPP can not only realize the multicast and broadcast of pure-text low-speed messages, but also realize the multicast and broadcast of high-speed multimedia services, which offers abundant video, audio and multimedia services, and is adapted to the trend in mobile data development and provides a better service anticipation to the development of 3G services.

In LTE (Long Term Evolution), MBMS service may employ multicast mode, referred to as the Multicast/Broadcast, over Single Frequency Network (MBSFN) transmission mode, wherein the MBMS service realized by multicast mode also is referred to as MBSFN service. In this way, a plurality of cells may employ the same modulation encoding format and the same physical resource to transmit the same content. The MBMS multiple cell transmission is characterized by (1) synchronous transmission in MBSFN region; (2) supporting multiple cell MBMS transmission combination; (3) the MTCH (Multicast Traffic Channel) and MCCH (Multicast Control Channel) being mapped to the MCH (Multicast Channel) in p-T-m (point-to-multi-point); (4) MBSFN synchronous region, MBSFN region, MBSFN transmission, reserved cell being kept in semi-static configuration by operation. Thus, the UEs (User Equipment) of a plurality of cells may receive a plurality of MBMS data of same content and implement SFN combination, so as to increase the gain of received signal.

A plurality of cells employing the same physical resource and MBSFN transmission mode to transmit the same MBMS service constitute an MBSFN region. In the real LTE networking, an MBSFN region has several MBSFN services, all MBSFN services belonging to a same MBSFN region can be referred to as an MBSFN service group. That is to say, an MBSFN service group only belongs to an MBSFN region. An MBSFN region comprises a plurality of cells, each of which is configured with a completely same MBSFN service group. The data channel MTCH of a plurality of MBSFN services having the same MBSFN region, and the control channel MCCH of the MBSFN service may be multiplexed into an MCH. The MCCH of the same MBSFN region and a plurality of MTCHs, i.e., a plurality of logic channels may mapped to the same transmission channel MCH.

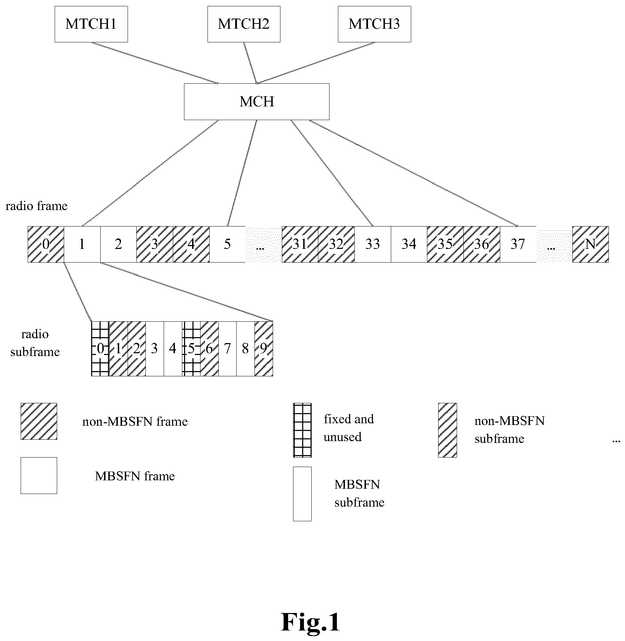

Fig.1 is the schematic diagram of the multicast resources allocated in the MBSFN Subframe Allocation Pattern (MSAP) occasion of an MCH according to the relevant art. As shown in Fig.1, in the LTE system, the MCH is the transmission channel characterized by performing p-T-m transmission, the corresponding physical resource is the multicast resource allocated by the system for transmitting MBMS service (MTCH), and one MCH is carried on some multicast resources comprising several MBSFN frames and subframes. Those multicast resources employ an MSAP to configure radio frame allocation pattern or radio subframe allocation pattern. The multicast resources of each MBSFN region can be allocated into a plurality of groups by using a subframe as the unit. Each group may constitute one MCH or a plurality of groups constitute one MCH. Thus, the pattern used in constituting each MCH is referred to as the MSAP of the MCH, and one MSAP describes the physical resource of one MCH. Each cell may have one or more MCHs, each of which is uniquely corresponding to one MSAP and uniquely belongs to one MBSFN region, but each MBSFN region may have one or more MCHs. The multicast resource configuration method of each MCH is to configure an MSAP for each MCH.

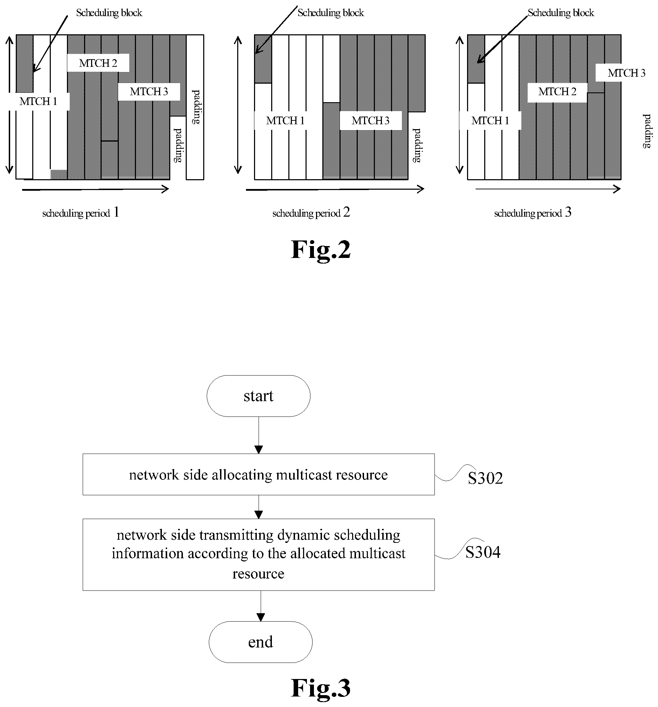

Fig.2 is the schematic diagram of the scheduling blocks and a plurality of MTCH multicast resources designed by the scheduling blocks according to the related art. As shown in Fig.2, in order to improve MTCH transmission efficiency, a plurality of MTCHs carried on each MTH may employ dynamic scheduling method, by which 2 or more than 2 MTCHs can be multiplexed in one MBSFN subframe and occupy a part of the subframe resources. In the related art, the MSAP occasion in MSAP concepts indicates all multicast resources included in one MCH corresponding to a certain MSAP during one dynamic scheduling period. The MSAP occasion may comprise a plurality of MTCHs, dynamic scheduling information, and MCCH. The dynamic scheduling information may be carried on an MCA control element or a separate multicast scheduling channel (MSCH). The length of the MSAP occasion can be fixed to be 320 ms. Similarly, one dynamic scheduling period (simplified as scheduling period herein) generally is fixed to be 320 ms, or it can also be 2*ⁿ* ×320 ms (n = -5, -4, -3, -2, -1, 0, 1, 2, 3, 4,..., N). Correspondingly, the length of MSAP occasion generally is one scheduling period, also referred to as one dynamic scheduling period. The present invention assumes the length of MSAP occasion to be 320 ms, and the MSAP occasions with other lengths employ a similar method.

A plurality of MBSFN frames and MBSFN subframes are allocated to one MCH through the MSAP, wherein the subframes transmitted in multicast mode are referred to as MBSFN subframes, and the frames containing an MBSFN subframe is referred to as MBSFN frames. In one scheduling period, the maximum number of the MBSFN subframes allocated in the MSAP occasion is correlated with the length of the scheduling period. Obviously, the longer the MCH scheduling period is, the larger the number of the MBSFN subframes contained in the MSAP occasion is.

Because one MBSFN frame may contain up to 6 MBSFN subframes, thus when the scheduling period is 320 ms, there can be up to 32 MBSFN frames, and the maximum number of MBSFN that can be configured is 192 (6x32). The multicast resource allocated by one MCH comprises the first MBSFN subframe of the first MBSFN frame to the last MSFN subframe of the last MSFN frame, all of which can be numbered from 0, 1, 2,..., 191. When the scheduling period is 2*ⁿ* ×320 ms, then the number of the MBSFN subframes allocated in the MSAP occasion may amount up to 6×2*ⁿ*×32, and these MBSFN subframes can be numbered with 0, 1, 2, ..., (6× 2*ⁿ* × 32-1) in sequence.

Each MSAP occasion configured in one MCH may bear dynamic scheduling information for scheduling the multicast resources allocated by each MTCH for all the time. The granularity for the dynamic scheduling indicated by the scheduling block can be a plurality of MBSFN subframes, or one MBSFN subframe, i.e., the resource of one MBSFN subframe can be shared by 2 or more than 2 MTCHs.

The dynamic scheduling information contains the mapping information between the MTCHs and the assistant MSAP subframes, which can be determined according to the index numbers in one MSAP period. In the present invention, the dynamic scheduling information can be carried on a dynamic scheduling block which is also referred to as a scheduling block. The scheduling information eventually refers to the index numbers of the MBSFN subframes of a certain MSAP. By reading the scheduling block, a UE may acquire to which MBSFN subframes each MTCH has been assigned, and read the interested MTCH from the corresponding MBSFN subframes.

The information in the scheduling block indicates the number of MBSFN subframes occupied by each MTCH, and each MTCH can be indicated by the MBSFN subframe number at the beginning of the MTCH; and/or MBSFN subframe number at the end of the MTCH, and/or the number of continuous MBSFN subframes. The MCCH indicates the current MSAP occasion, i.e., which MTCHs are in the current scheduling period, and each MTCH has an identifier, i.e., MTCH ID. A sequencing method is employed by the scheduling block to indicate each MTCH. That is: the first MTCH emerged in the scheduling block is the MTCH corresponding to the first MTCH ID emerged in the MCCH, and the second MTCH emerged in the scheduling block is the MTCH corresponding to the second MTCH ID emerged in the MCCH, and so on. Thus the scheduling block is only required to indicate the number of MBSFN subframes occupied by each MTCH respectively, and the UE may acquire the multicast resource occupied by each MTCH (each MTCH ID) of the current scheduling block according to the MTCH ID acquired by reading the MCCH. When receiving the interested MBMS service, the UE is only required to read the MBMS service data from the MBMS subframes indicated by the scheduling block, i.e., read the MTCH from those MBSFN subframes.

However, when a certain interested MTCH of a UE has not been allocated multicast resource in one or more scheduling periods, i.e., the MTCH is not scheduled, the UE is required to receive other MBSFN subframes during the current scheduling period or several scheduling periods, which will result in the UE unnecessarily consuming electrical energy. And when the MCCH is configured with a plurality of MTCHs, if a certain service does not occur in the scheduling block, that is to say, a certain MTCH has no data to transmit, then the UE cannot acquire the sequence of each MTCH configured by the MCCH according to the dynamic information indicated by the scheduling block, and cannot learn which MBSFN subframes are occupied by the interested MTCH and correctly read the MBMS service data carried on these subframes.

"3rd Generation Partnership Project; Technical Specification Group Radio Access Network; Introduction of the Multimedia Broadcast Multicast Service (MBMS) in the Radio Access Network (RAN); Stage 2 (Release 8) 3GPP STANDARD; 3GPP TS 25.346, 3RD GENERATION PARTERSHIP PROJECT (3GPP), MOBILE COMPETENCE CENTRE; 650, ROUTE DES LUCIOLES; F-06921 SOPHIA-ANTIPOLIS CEDEX; FRANCE" discloses a method and an apparatus similar to those initially defined which provide a technical solution; however, the above mentioned problem still remains unsolved.

Document EP 2 262 290 A1, which is comprised in the state of the art pursuant to Article 54(3) EPC, teaches that a special value can be represented by the maximum value of the Ending Point Index (EPI) field, for example "11111111" (decimal value of 255) for the case of a scheduling period of 320 ms.

### Summary of the Invention

Considering that the related art will result unnecessary electrical energy waste in a UE, and that the UE cannot learn that which MBSFN subframes are occupied by the interesting MTCH and correctly read the MBMS service data carried on these subframes for the MTCH having no data to transmit, the present invention is thus provided. To this end, the main purpose of the present invention is to provide an improved solution for processing dynamic scheduling information based on multicast/broadcast service to solve at least one of above-mentioned problems.

In order to achieve the above object, a method for processing dynamic scheduling information based on multicast/broadcast service as defined in claim 1 is provided according to one aspect of the present invention.

To achieve the above object, an apparatus for processing dynamic scheduling information based on multicast/broadcast service as defined in claim 8 is provided according to another aspect of the present invention.

According to another aspect of the invention a user equipment as defined in claim 11 is also provided.

### Brief Description of the Drawings

Drawings are provided for the further understanding of the present invention and form a part of the application, which are used to explain the present invention with embodiments of the present invention rather than limit the present invention. In the drawings:
Fig.1 is a schematic diagram of the multicast resource allocated in the MBSFN Subframe Allocation Pattern (MSAP) occasion of one MCH according to the related art;
Fig.2 is a schematic diagram of the scheduling blocks and a plurality of MTCH multicast resources designed by the scheduling blocks according to the related art;
Fig.3 is a flow chart of the method for processing dynamic scheduling information based on multicast/broadcast service according to the embodiment of the present invention;
Fig.4 is a structure block diagram of the apparatus for processing dynamic scheduling information based on multicast/broadcast service according to the embodiment of the present invention; and
Fig.5 is a preferable structure block diagram of the apparatus for processing dynamic scheduling information based on multicast/broadcast service according to the embodiment of the present invention.

### Detailed Description of the Embodiments

### Functional Overview

Considering the problem in the related art that when several MTCHs are not scheduled in one scheduling period, how a UE precisely finds in which multicast resources the interested MTCH is configured, or how the UE finds the interested MTCH thereof is not scheduled, the embodiments of the present invention provide an improved processing solution for dynamic scheduling information based on multicast/broadcast services to allocate an MBSFN subframe number of the special value beyond available MBSFN subframe numbers to an unscheduled MTCH, or allocate no MBSFN subframe number to an unscheduled MTCH, or configure a flag to an unscheduled MTCH to indicate that the MTCH is unscheduled, or configure a flag to a scheduled MTCH to indicate that the MTCH is scheduled and configure another flag to an unscheduled MTCH to indicate that it is not scheduled, so as to reduce the power consumption by the UE.

It is to be noted that the embodiments and features in those embodiments can be combined when there is no conflict. The present invention will be described hereinafter in detail in reference to the drawings and in conjunction with the embodiments.

### Method Embodiment

According to the embodiments of the present invention, a method for processing dynamic scheduling information based on multicast/broadcast services is provided. Fig.3 is a flow chart of the method for processing dynamic scheduling information based on multicast/broadcast service according to the embodiment of the present invention. As shown in Fig.3, the method comprises the following Steps 302-304.

Step 302, allocates multicast resources at the network side, wherein in one scheduling period, the allocation is performed by employing one of the following ways: (1) allocating an MBSFN subframe number of a special value (for example, beyond the available MBSTN subframe numbers) to an unscheduled MTCH, or allocating no MBSFN subframe number to an unscheduled MTCH; (2) configuring an identifier to an unscheduled MTCH to indicate that the MTCH is not scheduled; (3) configuring an identifier to a scheduled MTCH to indicate that the MTCH is scheduled; (4) configuring a special value to a scheduled MTCH to indicate that it is scheduled. The MBSFN subframe numbers comprise beginning MBSFN subframe number and/or ending MBSFN subframe number and/or number of continuous subframes. In the case of not allocating multicast/broadcast subframe number to a multicast service channel, the scheduling block only contains the multicast service channel identifier. In the case of employing a flag to indicate whether a multicast service channel is scheduled, the scheduling block is required to contain a flag of the multicast service channel. For example, the flag indicating whether each multicast service channel is scheduled uses identifier "1" to indicate that a multicast service channel is scheduled, and identifier "0" to indicate that a multicast service channel is not scheduled. At this time, whether or not a multicast service channel is scheduled can be expressed as: {MTCH identifier, 0/1}.

Further, when the identifier = "1", the service is scheduled, and more multicast resources need to be allocated to the service, thus the expression is: {MTCH identifier, 1, beginning subframe and/or ending subframe and/or subframe number}; when the identifier="0", the service is not scheduled, and no more multicast resources need to be allocated to the service, thus the expression is: {MTCH identifier, 0}.

Note that the flag indicating whether the multicast service channel is scheduled can be flag information or an identifier (for example, "0" or "1"), and the flag can be realized in various ways, not limited to the ways in above embodiment.

In particular, in a scheduling period, if a certain MTCH is not scheduled, i.e., no multicast resource is allocated to the MTCH, then a special value beyond the available MBSFN subframes can be allocated to the MTCH, e.g., a value beyond (6×2*ⁿ* × 32-1), wherein, the scheduling period can be (2*ⁿ* × 320) ms, n= -5, -4, -3, -2, -1, 0, 1, 2, 3, 4,..., N; and a known value agreed by both the network side and the UE, which can be one or more of above special values, can also be allocated to the MTCH.

In particular, in one scheduling period, if a certain MTCH is not scheduled, i.e., no multicast resource is allocated to the MTCH, then no MBSFN subframe resource will be allocated to the MTCH, i.e., there is only a number for the MTCH but no multicast resource is allocated to it.

In particular, in one scheduling period, if a certain MTCH is not scheduled, or is scheduled, then a special value is allocated to the MTCH. For example, the special value being 1 indicates that the MTCH is scheduled, and 0 indicates that the MTCH is not scheduled.

Step 304, according to the allocated broadcast resource, the network side transmits dynamic scheduling information. Preferably, in the case of allocation way (1), the dynamic scheduling information may comprise: an MTCH being allocated a special value.

In particular, the special value is a value beyond the available MBSFN subframe numbers, and/or without allocating any MBSFN number, and/or an identifier for indicating an unscheduled MTCH.

After Step 304, the method also comprises that, the UE receives dynamic scheduling information, and reads the MBSFN subframe number of the MTCH from the dynamic scheduling information; and the UE determines that the network side has not scheduled the MTCH when the read MBSFN subframe number is the special value.

Further, the special value beyond the available MBSFN subframe numbers can be used to indicate the schedule period in which the MTCH is scheduled; thus the UE may determine the schedule period in which the MTCH is scheduled according to the special value, and acquire the broadcast resource allocated in the determined scheduling period.

That is to say, in a certain scheduling period, when the UE reads an MBSFN subframe number allocated to the interested MTCH which is beyond the valid number, it will no longer read the information of other MBSFN subframes in the scheduling period; the UE further determines whether the interested MTCH will resume reading the scheduling block in the next scheduling period or in a future scheduling period spaced by several scheduling periods according to the specific value of the MBSFN subframe number, and acquires the multicast resource allocated to the MTCH accordingly.

In particular, the UE is required to acquire multicast resource according to the MCCH content, wherein the UE reads the MCCH content at a predetermined time, and the predetermined time satisfies the following condition: (system frame number) mod (MCCH repeat period or MCCH modification period)=P.

In the above, the MCCH repeat period is equal to an integral multiple of the scheduling period or the scheduling period times a reciprocal of an integer, and the multicast control channel modification period is equal to an integral multiple of the multicast control channel repeat period. For example, when the scheduling period is fixed to be 320 ms, the MCCH repeat period is equal to an integral multiple of 320 ms.

This embodiment employs the method of allocating an MBSFN subframe number of a special value beyond the available MBSFN subframe numbers to the unscheduled MTCH, to avoid the unnecessary electric energy consumption by the UE, which is resulted from that the UE is required to receive other MBSFN subframes in one or more scheduling periods when a certain interested MTCH of the UE is not scheduled in one or more scheduling periods. Thus, this method can save the electric energy in UE.

The realization process according to the present invention will be described in connection with the embodiments as follows.

### Embodiment 1

In a scheduling period of 2*ⁿ* ×320 ms (n=-5, -4, -3, -2, -1, 0, 1, 2, 3, 4,...,N, wherein N is an integer), MSAP occasion can be configured with up to (6× 2*ⁿ* × 32) MBSFN subframes. Thus the MBSFN subframe numbers in the MBSFN occasion can be 0,1,2,...,(6× 2*ⁿ* × 32-1), which are valid numbers. An MBSFN subframe number larger than (6 × 2*ⁿ* × 32-1) is an invalid number, also referred to as a special value, not representing a special meaning instead of a real MBSFN number. If the number of the beginning MBSFN subframe allocated to a certain MTCH is an invalid number, then it implies that the MTCH is not scheduled in the scheduling period (i.e., the MTCH has no allocated multicast resource).

For example, in a scheduling period of 320ms, the total MBSFN subframe numbers configurable to the MSAP occasion are 0, 1, ... 191. The multicast resource indicated for each MTCH in the scheduling block, i.e., the valid value range of the beginning subframe number of each MTCH is 0, 1, ..., 191. Similarly, when each MTCH is configured with an ending subframe number or the number of subframes in the scheduling block, the value range is from 0 to 191 too, which are the valid values of the multicast resource allocated to each MTCH by the scheduling block. On the contrary, when the value is 192 or larger, the UE can not find a really usable beginning or ending MBSFN subframe number or the number of MBSFN subframes according to the value, then it is obvious that the value greater than 191 is an invalid value (invalid number), also referred to as a special value. When the beginning MBSFN subframe number of an MTCH read by the UE is larger than 191, the UE considers that the MTCH was not scheduled in the scheduling period, that is to say, no multicast resource was allocated to it.

The scheduling block indicates, for each MTCH, that which multicast resource has been allocated to it, for example indicates which MBSFN subframe is occupied by each MTCH. For each unscheduled multicast resource, i.e., an MTCH without an allocated MBSFN subframe, the scheduling block allocates special indication information for it. The special indication information can be beyond the MBSFN subframe numbers configured for each MTCH by the scheduling block, and also can be a known special value agreed by the network side and the UE. For example, when the period of one scheduling block is 320ms, the maximum value of the MBSFN subframes configured by the scheduling block is 191, and the special value can be represented by a value not less than 192.

In summary, in one scheduling period, if a certain MTCH is not scheduled, i.e., no multicast resource is allocated to the MTCH, then a special value beyond the available MBSFN subframes is allocated to the MTCH, such as a value beyond (6× 2*ⁿ* × 32-1), wherein, the scheduling period is (2*ⁿ* × 320) ms, n=-5, -4, -3, -2, -1,0, 1, 2, 3, 4,..., N; or a known value agreed by both the network side and the UE is allocated to the MTCH. The agreed value generally is one or more of above special values.

When the scheduling block indicates the multicast resource to MTCH, and the number indicating the beginning MBSFN subframe of each MTCH, and/or the number of the ending MBSFN subframe number is employed, the scheduling block configures one or two values beyond assignable MBSFN subframe numbers to the unscheduled MTCH of multicast resource as the beginning MBSFN subframe number and/or ending MBSFN subframe number and/or the number of continuous subframes. For example, when the scheduling period is 320ms, K or L is employed as the beginning MBSFN subframe number and/or ending MBSFN subframe number and/or the number of continuous subframes, and both K and L are larger than 191.

When the UE reads the scheduling block of a certain MSAP occasion, according to the order of a plurality of MTCHs known from reading the MCCH, the UE can obtain the multicast resource allocated to each MTCH respectively. When the beginning MBSFN subframe number and/or ending MBSFN subframe number and/or the number of continuous subframes configured by one/more MTCHs is not a valid number value, or the subframe number is predetermined special value, the UE learns that this/these MTCH are not allocated multicast resources.

By this method, the UE may precisely learn that each MTCH is allocated which multicast resource, and also learn that which MTCH(s) is(are) not allocated the multicast resource. Thereafter, the UE may allocate information to the corresponding MBSFN subframe to read the MTCH content according to the resource of each MTCH. When a certain interested MTCH of the UE is not scheduled to the multicast resource, the UE will not read the information of other subframe of the MSAP occasion to save electricity.

The following is an example:
The method of the network side configuring the multicast resource for a plurality of MTCHs, comprises, at the network side, an improved nobeB (E-UTRAN NodeB, or eNodeB), a relay node, etc.
   (1) The network side indicates one or more MCHs in the MCCH, and indicates that each MCH has several MBSFN services corresponding to several different MTCH IDs; and also indicates that which multicast resource is configured for each MCH.
      Here, when the scheduling period of a certain MCH is a fixed value (for example: 160ms, 320ms, 640ms, etc.), then the MCCH is not required to configure the scheduling period of the MCH. When the scheduling period of a certain MCH is not a fixed value (for example: not 320ms, etc.), the scheduling period of the MCH may be configured on the MCCH. The scheduling period uniquely determines the maximum number of the MBSFN frames and the MBSFN subframes contained in the MSAP occasion.
      Here, all MBSFN services indicated by the MCCH may constitute one MTCH list. The first emerged MBSFN service is numbered as 1; the second emerged MBSFN service is numbered as 2, and so on. Till the last MBSFN service emerges, the number allocated to each MBSFN service is its identifier, increasing successively starting from 1 or 0. Or, all MBSFN services of each MCH indicated by the MCCH are allocated one identifier, corresponding to a number. It is to be noted that the identifier or number of each MBSFN service can be a discontinuous identifier or number, but must be a unique identifier or number.
(2) The network side indicates the several MTCH multicast resource mapped by the MCH in the scheduling block of one MSAP occasion in a certain scheduling period.

Here, the UE is required to read the scheduling block at first, then determines the interested MBMS service is read from which MBSFN subframes, or determines not to read any other MBSFN subframe in the scheduling block (when its interested MTCH is not scheduled) according to the dynamic scheduling content of the scheduling block. Thus the scheduling block is generally configured in the first MBSFN subframe among all MBSFN subframes allocated in one MSAP occasion.

Here, when the scheduling period of a certain MCH is a fixed value (for example, 160ms, 320ms, or 640ms, etc.), the dynamic scheduling information of the scheduling block is not required to configure the scheduling period of the MCH; when the scheduling period of a certain MCH is not a fixed value (for example, not fixed to be 320ms), the dynamic scheduling information configured in the scheduling block is also required to configure the scheduling period of the MCH; the scheduling period uniquely determines the maximum number of the MBSFN frames and the MBSFN subframes contained in the MSAP occasion.

Here, for a scheduled MTCH, the scheduling block allocates the multicast resource to it through configuring a valid MBSFN subframe number; for an unscheduled MTCH, the scheduling block does not allocate the multicast resource to it through configuring an invalid MBSFN subframe number.

Here, the way of the scheduling block allocating the multicast resource to each MTCH is to configure one beginning MBSFN subframe number, or ending MBSFN subframe number or the number of continuous MBSFN subframes to it. For a scheduled MTCH, the configured beginning MBSFN subframe number or ending MBSFN subframe number or the number of continuous MBSFN subframes is a valid value; for an unscheduled MTCH, the configured value is a special value or an agreed fixed value.

Here, the scheduling block may indicate each MTCH number impliedly or expressly. Indicating impliedly means that each MTCH of the scheduling block is numbered according to the sequence of the MTCH indicated on the MCCH, i.e., the first emerged MTCH on the MCCH is numbered with 1, the second numbered 2, and so on, till the last MTCH; indicating expressly means that each MTCH of the scheduling block is configured with a unique number which has a one to one correspondence relationship with the MTCH number of the MCCH.

The method for the UE reading the interested MBMS is as follows:
(1) The UE reads an MCCH to acquire one or more MCHs, and learns which MTCHs with certain MTCH IDs are configured in each of the MCHs.
(2) In a scheduling period, the UE reads the multicast resources allocated to each MTCH of the scheduling block of the MSAP occasion of a certain MCH, i.e., the UE may learn each MTCH is allocated which multicast resource, and which MTCH is not allocated the multicast resource.
   The UE reads whether the scheduling block is configured with a scheduling period to learn the scheduling period length, how many radio frames are in the scheduling period, and the maximum number of the MBSFN subframes configurable in the MSAP occasion.
   In addition, the scheduling period may be configured on the MCCH instead of the scheduling block. That is to say, the UE may learn the time length of the scheduling period of a certain MCH through reading the MCCH content, i.e., how many radio frames in the scheduling period, and the maximum number of the MBSFN subframes configured in the MSAP occasion.
   The scheduling period of a certain MCH is configured on the scheduling block or the MCCH, and has different valid time. If it is configured on the scheduling block, then the scheduling period is only suitable to the current scheduling, and the schedule periods of each dynamic scheduling are allowed to be different; if it is configured on the MCCH, the UE reads the MCCH till the MCCH is updated, and all scheduling periods are not allowed to vary, that is to say, all scheduling periods are the same.
(3) When the interested MTCH of the UE is allocated a multicast resource, the UE receives the MTCH content in the MBSFN subframe allocated to the MTCH, and the UE does not receive and read data of other MBSFN subframes; when the UE interested MTCH is not allocated a multicast resource, the UE will not receive any MBSFN subframe of the scheduling period, nor reads any MBSFN subframe data of the scheduling period, and the UE will re-read the content of the scheduling block in the next scheduling period, and determine whether the interested MTCH is scheduled, and further determine whether it is required to receive and read the MBSFN subframe in a certain scheduling period.

### Embodiment 2

In one 2*ⁿ* × 320 ms (n=-5, -4, -3, -2, -1, 0, 1, 2, 3, 4,...,N, wherein N is an integer) scheduling period, the MSAP occasion can be configured with up to (6×2*ⁿ*×32) MBSFN subframes, and thus the MBSFN subframe numbers in the MBSFN occasion can be 0,1,2,...,(6×2*ⁿ*×32-1), which are valid numbers. An MBSFN subframe number larger than (6×2*ⁿ* × 32-1) is an invalid number, also referred to as a special value, not representing a special meaning instead of a real MBSFN number. If the number of the beginning MBSFN subframe allocated to a certain MTCH is an invalid number, then it implies that the MTCH is not scheduled in the scheduling period (i.e., the MTCH has no allocated multicast resource). It is further indicated according to the special value that the MTCH will be scheduled after several subsequent scheduling periods.

In particular, in one 2*ⁿ* × 320 ms scheduling period, when the subframe number allocated to a certain MTCH by the scheduling block is larger than (6×2*ⁿ*×32-1), then it means that the MTCH is unscheduled in the scheduling period; further,
when the beginning MBSFN subframe number is 6× 2*ⁿ* × 32, the MTCH will be allocated a multicast resource in the next scheduling period;
when the beginning MBSFN subframe number is 6×2*ⁿ* × 32+1, the MTCH will be allocated a multicast resource in the second scheduling period after the current scheduling period;
when the beginning MBSFN subframe number is 6× 2*ⁿ* × 32 +2, the MTCH will be allocated a multicast resource in the third scheduling period after the current scheduling period;
when the beginning MBSFN subframe number is 6× 2*ⁿ* × 32 +k, the MTCH will be allocated a multicast resource in the (k+1) scheduling period after the current scheduling period.

Thus, in a certain scheduling period, when the UE reads the MBSFN subframe number allocated to the interested MTCH beyond the valid numbers, the UE will not read the information in other MBSFN subframes of the current scheduling period; the UE further determines whether the interested MTCH will resume reading the scheduling block in the next scheduling period or in a future scheduling period spaced by several scheduling periods according to the specific value of the MBSFN subframe number, and acquires the multicast resource allocated to the MTCH accordingly.

### Embodiment 3

In one scheduling period, if a certain MTCH is not allocated an MBSFN subframe, at this time, the scheduling block has only one MTCH identifier (MTCH ID, that is to say, the number of one MBSFN service), which means that the MTCH is unscheduled; or, in one scheduling period, if a certain MTCH is not allocated an MBSFN subframe, at this time, the special value configured for the MTCH in the scheduling block is set to 0, which means that the MTCH is unscheduled.

The scheduling block indicates, for each MTCH, that which multicast resource has been allocated to it respectively. For example, it indicates that each MTCH occupies which MBSFN subframe. For each unscheduled multicast resource, i.e., an MTCH being allocated no MBSFN subframe, the scheduling block does not allocate an MBSFN subframe to it.

By this method, the UE may precisely learn each MTCH is allocated which multicast resource, and which MTCH(s) is (are) not allocated multicast resources. Thereafter, the UE may read the MTCH content from the corresponding MBSFN subframe according to the resource allocation information of each MTCH in the scheduling block. When a certain interested MTCH of the UE is not scheduled with multicast resource, the UE may no longer read the information of other subframes of the MSAP occasion to realize the power-saving effect.

The following is an example:
The network side configures the multicast resources for a plurality of MTCHs, wherein the network side comprises an improved nobeB (E-UTRAN NodeB, or eNodeB), a relay node, etc.
   (1) The network side indicates one or more MCHs in the MCCH, and indicates that each MCH has several MBSFN services corresponding to several different MTCH IDs; and also indicates that which multicast resource is configured for each MCH.
      Here, all MBSFN services of each MCH indicated by the MCCH may constitute one MTCH list. The first emerged MBSFN service is numbered as 1, the second emerged MBSFN service is numbered as 2, and so on, till the last MBSFN service emerges. The number allocated to each MBSFN service is its identifier, increasing successively starting from 1 or 0; or all MBSFN services of each MCH indicated by the MCCH is allocated one identifier which is equivalent to a number. It is to be noted that the identifier or number of each MBSFN service can be a discontinuous identifier or number, but must be a unique identifier or number.
      Here, when the scheduling period of a certain MCH is a fixed value (for example: 160ms, 320ms, 640ms, etc.), then the MCCH is not required to configure the scheduling period of the MCH; when the scheduling period of a certain MCH is not a fixed value (for example: not 320ms, etc.), the scheduling period of the MCH can also be configured on the MCCH; and the scheduling period uniquely determines the maximum number of the MBSFN frames and the MBSFN subframes contained in the MSAP occasion.
   (2) The network side indicates several MTCH multicast resources mapped to a certain MCH in the scheduling block of one MSAP occasion in a scheduling period of the MCH.
      Here, the UE is required to read the scheduling block at first, then determines the interested MBMS service is read from which MBSFN subframes, or determines not to read any other MBSFN subframe in the scheduling block (when its interested MTCH is not scheduled) according to the dynamic scheduling content of the scheduling block; thus the scheduling block is generally configured on the first MBSFN subframe among all MBSFN subframes allocated in one MSAP occasion.
      Here, when the scheduling period of a certain MCH is a fixed value (for example, 160ms, 320ms, or 640ms, etc.), the dynamic scheduling information of the scheduling block is not required to configure the scheduling period of the MCH; when the scheduling period of a certain MCH is not a fixed value (for example, not fixed to be 320ms), the dynamic scheduling information configured in the scheduling block is also required to configure the scheduling period of the MCH; and the scheduling period uniquely determines the maximum number of the MBSFN frames and the MBSFN subframes contained in the MSAP occasion.
      Here, for a scheduled MTCH, the scheduling block allocates the multicast resource to it through configuring a valid MBSFN subframe number; for an unscheduled MTCH, the scheduling block does not configure a MBSFN subframe, but only an identifier of the MTCH; or for an unscheduled MTCH, the scheduling block sets a flag (for example, an identifier) of the MTCH indicating whether the MTCH is scheduled as 0; or for an unscheduled MTCH, the scheduling block sets a flag (for example, an identifier) of the MTCH indicating whether the MTCH is scheduled as 0 and for a scheduled MTCH, the scheduling block sets a flag (for example, an identifier) of the MTCH indicating whether the MTCH is scheduled as 1; or for a scheduled MTCH, the scheduling block sets a flag (for example, an identifier) of the MTCH indicating whether the MTCH is scheduled as 1.
      Here, the way of the scheduling block allocating the multicast resource to each MTCH is to configure one beginning MBSFN subframe number, or ending MBSFN subframe number or the number of continuous MBSFN subframes to it. For a scheduled MTCH, the configured beginning MBSFN subframe number or ending MBSFN subframe number or the number of continuous MBSFN subframes is a valid value; for an unscheduled MTCH, the configured value is a special value or an agreed fixed value.

The method for the UE reading the interested MBMS is as follows.
(1) The UE reads the MCCH to acquire one or more MCHs, and learns which MTCHs with certain MTCH IDs are configured in the MCH.
(2) In one scheduling period, the UE reads the multicast resources allocated to each MTCH of the scheduling block of the MSAP occasion of a certain MCH, i.e., the UE may learn each MTCH is allocated which multicast resource, and which MTCH is not allocated the multicast resource.
   The UE reads whether the scheduling block is configured with a scheduling period to learn the scheduling period length, how many radio frames are in the scheduling period, and the maximum number of the MBSFN subframes configured in the MSAP occasion.
   In addition, the scheduling period may be configured in the MCCH, instead of the scheduling block. That is to say, the UE may learn the time length of the scheduling period of a certain MCH through reading the MCCH content, i.e., how many radio frames are in the scheduling period, and the maximum number of the MBSFN subframe configured in the MSAP occasion.
   The scheduling period of a certain MCH is configured in the scheduling block or the MCCH, and has different valid time. If it is configured in the scheduling block, then the scheduling period is only suitable to the current scheduling, and the schedule periods of each dynamic scheduling are allowed to be different; if it is configured in the MCCH, the UE reads the MCCH till the MCCH is updated, and all scheduling periods are not allowed to vary, that is to say, all scheduling period are the same.
(3) When the UE interested MTCH is allocated a multicast resource, the UE receives the MTCH content in the MBSFN subframe allocated to the MTCH, and the UE does not receive and read data of other MBSFN subframe; when the UE interested MTCH is not allocated a multicast resource, the UE will not receive any MBSFN subframe of the scheduling period, nor reads any MBSFN subframe data of the scheduling period, and the UE will re-read the content of the scheduling block in the next scheduling period, and determine whether the interested MTCH is scheduled, and further determine whether it is required to receive and read the MBSFN subframe in a certain scheduling period.

### Embodiment 4

The UE reads the multicast resource allocated in the MSAP occasion in one scheduling period. In order to learn the multicast resource allocated to each MTCH, the UE first needs the MCCH to obtain which MTCHs are mapped to the MCH. This embodiment explains how the network side configures the MCCH, i.e., how the UE reads the MCCH.

The transmission period of the MCCH comprises the MCCH repeat period, and can also comprise or not comprise the MCCH modification period. The way for configuring the MCCH repeat period in system broadcast is to configure one parameter N in the system broadcast message, wherein the MCCH repeat period= the scheduling period xN. When the scheduling period is fixed to be 320ms, the MCCH repeat period is 320msxN, or 320msx (1/N), which means that the MCCH content is transmitted in an integral multiple of 320ms or 320ms times a reciprocal of an integer, wherein the minimum of N is 1, and the maximum can be arbitrarily configured without limitation.

When the transmission period of the MCCH has only the MCCH repeat period, but not the MCCH modification period, the MCCH repeat period is also referred to as the MCCH period. In addition, when the transmission period of the MCCH also comprises the MCCH modification period, the way for configuring the MCCH repeat period in the system broadcast message is to configure one parameter K in the system broadcast. The MCCH modification period = the MCCH repeat period xK, which indicates that the MCCH content is transmitted in an integral multiple of the MCCH repeat period, wherein the minimum of K is 1, and the maximum can be arbitrarily configured without limitation.

The way for the UE to acquire the MCCH content is: read the MCCH content when the following equation is satisfied: SFN mod (MCCH repeat period) = P (P is an integer). If the network side is also configured with the MCCH modification period, then the UE reads the MCCH content when the following equation is satisfied: SFN mod (MCCH modification period) = P. The UE reads the MCCH content in each MCCH repeat period. Because the MCCH content of each MCCH repeat period is the same, thus when the whole MCCH content is read, the UE is not required to read the MCCH content of other MCCH repeat periods, and the UE resumes reading the MCCH content in the next MCCH modification period.

The UE may learn the several MTCHs comprised in each MCH and the MTCH ID of each MTCH upon reading the MCCH content.

It is to be noted that, Embodiment 3 can be implemented by combining with Embodiments 1 and 2, or independently.

### Apparatus Embodiment

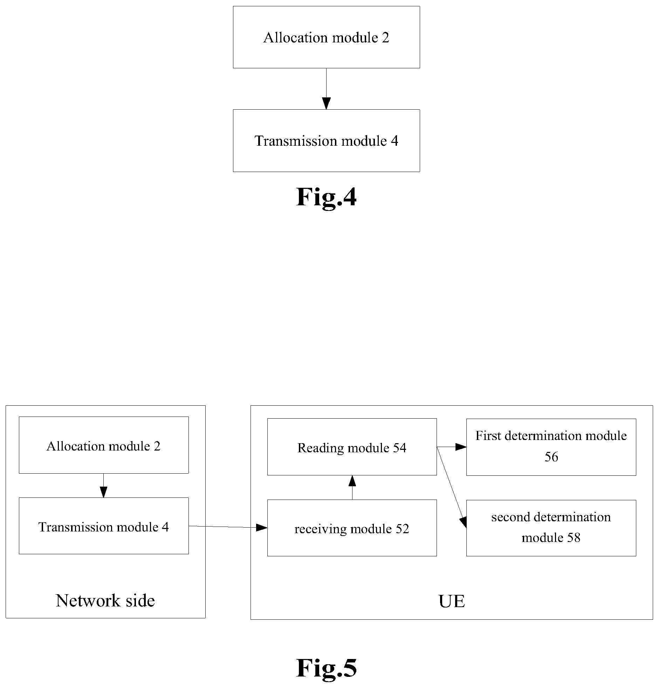

According to an embodiment of the present invention, an apparatus for processing dynamic scheduling information based on multicast/broadcast service is provided. Fig.4 is the structure block diagram of the apparatus for processing dynamic scheduling information based on multicast/broadcast service according to an embodiment of the present invention. As shown in Fig.4, the apparatus comprises an allocation module 2 and a transmission module 4 that may be configured at the network side. The apparatus will be described below.

The allocation module 2 is adapted to allocate the multicast resource; the transmission module 4, connect to an allocation module 4, is adapted to transmit dynamic scheduling information according to the multicast resource allocated by the allocation module 2.

In one scheduling period, the allocation module 2 employs one of the following ways to configure:
(1) each multicast service channel is configured with one flag indicating whether it is scheduled;
(2) a scheduled multicast service channel is configured with one flag indicating it being scheduled;
(3) an un-scheduled multicast service channel is configured with one flag indicating it not being scheduled; and
(4) an un-scheduled multicast service channel is allocated a SFN multicast/broadcast subframe number having a special value, or is not allocated a multicast/broadcast subframe number; at this time, the dynamic scheduling information may comprises the MTCH allocated a special value.

Fig.5 is a preferred structure block diagram of the apparatus for processing dynamic scheduling information based on multicast/broadcast service according to an embodiment of the present invention. As shown in Fig.5, preferably, the apparatus also comprises: a receiving module 52, a reading module 54, a first determination module 56, and a second determination module 58 configured in the UE, which will be described below.

The receiving module 52, connected to the transmission module 4, is adapted to receive the dynamic scheduling information; the reading module 54, connected to the receiving module 52, is adapted to read the SFN multicast/broadcast subframe number of the multicast service channel from the dynamic scheduling information; the first determination module 56, connected to the reading module 54, is adapted to determine that the network side has not scheduled the MTCH if the MBSFN subframe number read by the reading module 54 is a special value; the second determination module 58, connected to the reading module 54, is adapted to determine the scheduling period in which the MTCH is scheduled according to the special value corresponding to the MBSFN subframe number read by the reading module 54, and acquire the multicast resource allocated to the MTCH according to determined scheduling period.

Based on above description, when a certain interested MTCH of a UE is not allocated the multicast resource in one scheduling period or several scheduling period, i.e., the MTCH is not scheduled, the UE does not have to receive other MBSFN subframes in one scheduling period or several scheduling periods. Thus the UE can reduce electric energy consumption. At the same time, when the MCCH is configured with a plurality of MTCHs, and there are several unscheduled MTCHs in the scheduling block, the UE may precisely find that the interested MTCH is configured in which MBSFN subframe, and receive and read the MTCH data from that MBSFN subframe.

Obviously, those skilled in the art should understand that individual modules and steps of the present invention can be implemented with general computation devices integrated together or distributed in the network formed by a plurality of computation devices, alternatively implemented with program codes executable by computation devices, which can be stored in memory devices for execution by the computation devices, or implemented with ICs, or several modules or steps can be implemented with a single IC. Thus, the present invention is not limited to any particular hardware and software combination.

## Claims

1. A method for processing dynamic scheduling information based on multicast/broadcast services, comprising:
network side allocating multicast resources, wherein, in a scheduling period, for performing the allocation the network side transmits the dynamic scheduling information according to the allocated multicast resources;
the method being **characterised by** allocating a single frequency network (SFN) multicast/broadcast subframe number having a special value to the un-scheduled multicast service channel, said special value being a value beyond available SFN multicast subframe numbers,
wherein, when the scheduling period is 2*ⁿ* × 320 ms, the special value is a value beyond (6× 2*ⁿ* × 32 -1), n ∈ [-5, N], n ≠ 0.

2. The method according to Claim 1, **characterized in that** after the network side transmits dynamic scheduling information according to the allocated multicast resources, the method also comprises:
the user equipment (UE) receiving the dynamic scheduling information, and reading the SFN multicast/broadcast subframe number of the multicast service channel from the dynamic scheduling information; and
the UE determining that there is no scheduling multicast service channel at the network side when the read SFN multicast/broadcast subframe number is the special value.

3. The method according to Claim 2, **characterized in that** the special value is adapted to indicate the scheduling period in which the multicast service channel is scheduled.

4. The method according to Claim 3, **characterized in that** after the SFN multicast/broadcast subframe number of the multicast service channel is read from the dynamic scheduling information, the method also comprises:
the UE determining the scheduling period of the multicast service channel according to the special value, and obtaining the multicast resource according to the multicast channel content in the scheduling period.

5. The method according to Claim 4, **characterized in that**, before the UE obtains the multicast resource according to the multicast control channel content in the determined scheduling period, the method also comprises:
the UE reading the multicast control channel content at a predetermined time, wherein the predetermined time satisfies the following conditions: (system frame number) mod (multicast control channel repeat period or multicast control channel modification period)=P, where P is an integer; the multicast control channel repeat period is equal to an integral multiple of the scheduling period or the scheduling period times a reciprocal of an integer; and the multicast control channel modification period is equal to an integral multiple of the multicast control channel repeat period.

6. The method according to any one of Claims 1-5, **characterized in that** in the case that no multicast/broadcast subframe number is allocated to the multicast service channel, a scheduling block only contains an identifier of the multicast service channel.

7. The method according to any one of Claims 1-5, **characterized in that** the SFN multicast/broadcast subframe number comprises the beginning MBSFN subframe number; and/or the ending MBSFN subframe number and/or the number of continuous subframes.

8. An apparatus for processing dynamic scheduling information based on multicast/broadcast service, comprising:
an allocation module (2) adapted to allocate multicast resource, wherein in a scheduling period, for performing the allocation a transmission module (4) is adapted to transmit the dynamic schedule information according to the allocated multicast resources;
the apparatus being **characterised by** the allocation module (2) being adapted for allocating a SFN multicast/broadcast subframe number having a special value to the un-scheduled multicast service channel, said special value being a value beyond available SFN multicast subframe numbers,
wherein, when the scheduling period is 2*ⁿ* × 320 ms, the special value is a value beyond (6× 2*ⁿ* × 32 -1), n ∈ [-5, N], n ≠ 0.

9. The apparatus according to Claim 8, **characterized in that** the apparatus further comprises:
a receiving module (52) adapted to receive the dynamic scheduling information;
a reading module (54) adapted to read the SFN multicast/broadcast subframe number of the multicast service channel from the dynamic scheduling information;
a first determination module (56) adapted to determine that the multicast service channel is not scheduled if the SFN multicast broadcast subframe number read by the reading module is a special value.

10. The apparatus according to Claim 9, **characterized in that** the apparatus further comprises:
a second determination module (58) adapted to determine the scheduling period in which the multicast service channel is scheduled according to the special value corresponding to the SFN multicast broadcast subframe number read by the reading module, and acquire the multicast resource allocated to the multicast service channel during the determined scheduling period.

11. A user equipment, comprising:
a receiving module (52) adapted to receive dynamic scheduling information;
a reading module (54) adapted to read a SFN multicast/broadcast subframe number of a multicast service channel from the dynamic scheduling information;
**characterised by** a first determination module (56) adapted to determine that the multicast service channel is not scheduled if the SFN multicast broadcast subframe number read by the reading module (54) is a special value which is a value beyond available SFN multicast subframe numbers,
wherein, when the scheduling period is 2*ⁿ* × 320 ms, the special value is a value beyond (6× 2*ⁿ* × 32-1), n ∈ [-5, N], n ≠ 0.

12. The user equipment according to Claim 11, further comprising:
a second determination module (58) adapted to determine a scheduling period in which the multicast service channel is scheduled according to the special value corresponding to the SFN multicast broadcast subframe number read by the reading module (54), and acquire the multicast resource allocated to the multicast service channel during the determined scheduling period.

## Patentansprüche

1. Verfahren zur Verarbeitung von dynamischen Planungsinformationen auf der Basis von Multicast/Broadcast-Diensten, umfassend:
an der Netzwerkseite, die Zuweisung von Multicast-Ressourcen, wobei die Netzwerkseite in einer Planungsperiode zur Durchführung der Zuweisung die dynamischen Planungsinformationen gemäß den zugewiesenen Multicast-Ressourcen überträgt;
wobei das Verfahren **dadurch gekennzeichnet ist, dass** dem nicht-geplanten Multicast-Dienstkanal eine Gleichwellennetz (SFN)-Multicast/Broadcast-Teilrahmenzahl mit einem speziellen Wert zugewiesen wird, wobei der spezielle Wert ein Wert ist, der über den verfügbaren SFN-Multicast-Teilrahmenzahlen liegt,
wobei, wenn die Planungsperiode 2n x 320 ms beträgt, der spezielle Wert ein Wert über (6x2nx32-1), n ∈ [-5, N], n ≠ 0 ist.

2. Verfahren nach Anspruch 1, **dadurch gekennzeichnet, dass**, nachdem die Netzwerkseite die dynamischen Planungsinformationen gemäß den zugewiesenen Multicast-Ressourcen überträgt, das Verfahren auch umfasst:
dass die Benutzerausrüstung (UE, von engl. user equipment) die dynamischen Planungsinformationen empfängt und die SFN-Multicast/Broadcast-Teilrahmenzahl des Multicast-Dienstkanals aus der dynamischen Planungsinformation liest; und
die UE bestimmt, dass kein Planungs-Multicast-Dienstkanal an der Netzwerkseite vorhanden ist, wenn die gelesene SFN-Multicast/Broadcast-Teilrahmenzahl den speziellen Wert aufweist.

3. Verfahren nach Anspruch 2, **dadurch gekennzeichnet, dass** der spezielle Wert dazu geeignet ist, die Planungsperiode anzugeben, in welcher der Multicast-Dienstkanal geplant wird.

4. Verfahren nach Anspruch 3, **dadurch gekennzeichnet, dass**, nachdem die SFN-Multicast/Broadcast-Teilrahmenzahl des Multicast-Dienstkanals aus den dynamischen Planungsinformationen gelesen wird, das Verfahren auch umfasst:
dass die UE die Planungsperiode des Multicast-Dienstkanals gemäß dem speziellen Wert bestimmt und die Multicast-Ressource gemäß dem Multicast-Kanalinhalt in der Planungsperiode beschafft.

5. Verfahren nach Anspruch 4, **dadurch gekennzeichnet, dass**, bevor die UE die Multicast-Ressource gemäß dem Multicast-Steuerkanalinhalt in der bestimmten Planungsperiode beschafft, das Verfahren auch umfasst, dass:
die UE den Multicast-Steuerkanalinhalt zu einem vorbestimmten Zeitpunkt liest, wobei der vorbestimmte Zeitpunkt den folgenden Bedingungen entspricht: (Systemrahmenzahl) mod (Multicast-Steuerkanalwiederholungsperiode oder Multicast-Steuerkanalmodifikationsperiode)=P, wobei P eine ganze Zahl ist; die Multicast-Steuerkanalwiederholungsperiode gleich einem ganzen Vielfachen der Planungsperiode oder der Planungsperiode mal einem Kehrwert einer ganzen Zahl ist; und die Multicast-Steuerkanalmodifikationsperiode gleich einem ganzen Vielfachen der Multicast-Steuerkanalwiederholungsperiode ist.

6. Verfahren nach einem der Ansprüche 1-5, **dadurch gekennzeichnet, dass** in dem Fall, dass dem Multicast-Dienstkanal keine Multicast/Broadcast-Teilrahmenzahl zugewiesen ist, ein Planungsblock nur eine Kennung des Multicast-Dienstkanals enthält.

7. Verfahren nach einem der Ansprüche 1-5, **dadurch gekennzeichnet, dass** die SFN-Multicast/Broadcast-Teilrahmenzahl die MBSFN-Teilrahmenanfangzahl und/oder die MBSFN-Teilrahmenendezahl und/oder die Zahl fortlaufender Teilrahmen umfasst.

8. Vorrichtung zur Verarbeitung dynamischer Planungsinformationen auf der Basis von Multicast/Broadcast-Diensten, umfassend:
ein Zuweisungsmodul (2), das dazu geeignet ist, Multicast-Ressourcen zuzuweisen, wobei in einer Planungsperiode für die Zuweisung ein Übertragungsmodul (4) dazu geeignet ist, die dynamischen Planungsinformationen gemäß den zugewiesenen Multicast-Ressourcen zu übertragen;
wobei die Vorrichtung **dadurch gekennzeichnet ist, dass** das Zuweisungsmodul (2) dazu geeignet ist, dem nicht-geplanten Multicast-Dienstkanal eine SFN-Multicast/Broadcast-Teilrahmenzahl mit einem speziellen Wert zuzuweisen, wobei der spezielle Wert ein Wert ist, der über der verfügbaren SFN-Multicast-Teilrahmenzahl liegt, wobei, wenn die Planungsperiode 2n x 320 ms beträgt, der spezielle Wert ein Wert über (6x2nx32-1), n ∈ [-5, N], n ≠ 0 ist.

9. Vorrichtung nach Anspruch 8, **dadurch gekennzeichnet, dass** die Vorrichtung ferner umfasst:
ein Empfangsmodul (52), das dazu geeignet ist, die dynamischen Planungsinformationen zu empfangen;
ein Lesemodul (54), das dazu geeignet ist, die SFN-Multicast/Broadcast-Teilrahmenzahl des Multicast-Dienstkanals aus den dynamischen Planungsinformationen zu lesen;
ein erstes Bestimmungsmodul (56), das dazu geeignet ist, zu bestimmen, dass der Multicast-Dienstkanal nicht geplant ist, wenn die von dem Lesemodul gelesene SFN-Multicast-Broadcast-Teilrahmenzahl einen speziellen Wert aufweist.

10. Vorrichtung nach Anspruch 9, **dadurch gekennzeichnet, dass** die Vorrichtung ferner umfasst:
ein zweites Bestimmungsmodul (58), das dazu geeignet ist, die Planungsperiode zu bestimmen, in welcher der Multicast-Dienstkanal gemäß dem speziellen Wert geplant wird, welcher der von dem Lesemodul gelesenen SFN-Multicast-Broadcast-Teilrahmenzahl entspricht, und die dem Multicast-Dienstkanal während der bestimmten Planungsperiode zugewiesene Multicast-Ressource zu erfassen.

11. Benutzerausrüstung, umfassend:
ein Empfangsmodul (52), das dazu geeignet ist, dynamische Planungsinformationen zu empfangen;
ein Lesemodul (54), das dazu geeignet ist, eine SFN-Multicast/Broadcast-Teilrahmenzahl eines Multicast-Dienstkanals aus den dynamischen Planungsinformationen zu lesen;
**gekennzeichnet durch** ein erstes Bestimmungsmodul (56), das dazu geeignet ist, zu bestimmen, dass der Multicast-Dienstkanal nicht geplant ist, wenn die von dem Lesemodul (54) gelesene SFN-Multicast-Broadcast-Teilrahmenzahl einen speziellen Wert aufweist, der ein Wert ist, der über den verfügbaren SFN-Multicast-Teilrahmenzahlen liegt,
wobei, wenn die Planungsperiode 2n x 320 ms beträgt, der spezielle Wert ein Wert über (6x2nx32-1), n ∈ [-5, N], n ≠ 0 ist.

12. Benutzerausrüstung nach Anspruch 11, ferner umfassend:
ein zweites Bestimmungsmodul (58), das dazu geeignet ist, eine Planungsperiode zu bestimmen, in welcher der Multicast-Dienstkanal gemäß dem speziellen Wert geplant wird, welcher der von dem Lesemodul (54) gelesenen SFN-Multicast-Broadcast-Teilrahmenzahl entspricht, und die dem Multicast-Dienstkanal während der bestimmten Planungsperiode zugewiesene Multicast-Ressource zu erfassen.

## Revendications

1. Une méthode de traitement d'information de planification dynamique basé sur un service de diffusion/multidiffusion, comprenant:
l'attribution des ressources de multidiffusion côté réseau, où, au cours d'une période de planification, dans le cadre de l'attribution, le côté réseau transmet l'information de planification dynamique en fonction des ressources de multidiffusion attribuées;
la méthode étant **caractérisée par** l'attribution d'un numéro de sous-trame de diffusion/multidiffusion de réseau mono-fréquence (SFN) doté d'une valeur spéciale au canal de service de multidiffusion non planifié, cette valeur spéciale étant une valeur au-delà des numéros de sous-trame de multidiffusion SFN disponibles,
où, lorsque la période de planification est de 2ⁿ x 320 ms, la valeur spéciale est une valeur au-delà de (6x2ⁿ x 32 -1), n ∈ [-5, N], n ≠ 0.

2. La méthode selon la revendication 1, **caractérisée par le fait qu'**après la transmission de l'information de planification dynamique par le côté réseau en fonction des ressources de multidiffusion attribuées, la méthode comprend également:
l'équipement utilisateur (EU) recevant l'information de planification dynamique et lisant le numéro de sous-trame de diffusion/multidiffusion SFN du canal de service de multidiffusion à partir de l'information de planification dynamique; et
l'EU déterminant qu'il n'y a pas de canal de service de multidiffusion de planification du côté réseau lorsque le numéro de sous-trame de diffusion/multidiffusion SFN lu est la valeur spéciale.

3. La méthode selon la revendication 2, **caractérisée par le fait que** la valeur spéciale est adaptée pour indiquer la période de planification au cours de laquelle le canal de service de multidiffusion est planifié.

4. La méthode selon la revendication 3, **caractérisée par le fait qu'**après la lecture du numéro de sous-trame de diffusion/multidiffusion SFN du canal de service de multidiffusion à partir de l'information de planification dynamique, la méthode comprend également:
l'EU déterminant la période de planification du canal de service de multidiffusion en fonction de la valeur spéciale, et acquérant la ressource de multidiffusion en fonction du contenu du canal de multidiffusion au cours de la période de planification.

5. La méthode selon la revendication 4, **caractérisée par le fait qu'**avant l'acquisition par l'EU de la ressource de multidiffusion en fonction du contenu du canal de commande de multidiffusion au cours de la période de planification déterminée, la méthode comprend également:
l'EU lisant le contenu du canal de commande de multidiffusion à un instant prédéterminé, où l'instant prédéterminé répond aux conditions suivantes: (numéro de trame système) mod (période de répétition du canal de commande de multidiffusion ou période de modification du canal de commande de multidiffusion)=P, où P est un entier; la période de répétition du canal de commande de multidiffusion est égale à un multiple entier de la période de planification, ou à la période de planification multipliée par un inverse d'un entier; et la période de modification du canal de commande de multidiffusion est égale à un multiple entier de la période de répétition de canal de commande de multidiffusion.

6. La méthode selon une quelconque des revendications 1 à 5, **caractérisée par le fait que** dans le cas où aucun numéro de sous-trame de diffusion/multidiffusion n'est attribué au canal de service de multidiffusion, un bloc de planification contient uniquement un identifiant du canal de service de multidiffusion.

7. La méthode selon une quelconque des revendications 1 à 5, **caractérisée par le fait que** le numéro de sous-trame de diffusion/multidiffusion SFN inclut le numéro du début de sous-trame MBSFN; et/ou le numéro de la fin de sous-trame MBSFN, et/ou le numéro de sous-trames continues.

8. Un appareil pour le traitement de l'information de planification dynamique basé sur un service de diffusion/multidiffusion, comprenant:
un module d'attribution (2) adapté pour attribuer des ressources de multidiffusion, où, au cours d'une période de planification, dans le cadre de l'attribution, un module de transmission (4) est adapté pour transmettre l'information de planification dynamique en fonction des ressources de multidiffusion attribuées;
l'appareil étant **caractérisé en ce que** le module d'attribution (2) est adapté pour l'attribution d'un numéro de sous-trame de diffusion/multidiffusion SFN doté d'une valeur spéciale au canal de service de multidiffusion non planifié, cette valeur spéciale étant une valeur au-delà des numéros de sous-trame de multidiffusion SFN disponibles,
où, lorsque la période de planification est de 2ⁿ x 320 ms, la valeur spéciale est une valeur au-delà de (6x2ⁿ x 32 -1), n ∈ [-5, N], n ≠ 0.

9. Un appareil selon la revendication 8, **caractérisé par le fait que** cet appareil contient également:
un module de réception (52) adapté à la réception de l'information de planification dynamique;
un module de lecture (54) adapté à la lecture du numéro de sous-trame de diffusion/multidiffusion SFN du canal de service de multidiffusion à partir de l'information de planification dynamique;
un premier module de détermination (56) adapté pour la détermination de la non-planification du canal de service de multidiffusion si le numéro de sous-trame de diffusion/multidiffusion SFN lu par le module de lecture est une valeur spéciale.

10. Un appareil selon la revendication 9, **caractérisé par le fait que** cet appareil contient également:
un deuxième module de détermination (58) adapté pour la détermination de la période de planification au cours de laquelle le canal de service de multidiffusion est planifié en fonction de la valeur spéciale correspondant au numéro de sous-trame de diffusion/multidiffusion SFN lu par le module de lecture, et pour l'acquisition des ressources de multidiffusion attribuées au canal de service de multidiffusion pendant la période de planification déterminée.

11. Un équipement utilisateur, comprenant:
un module de réception (52) adapté pour la réception de l'information de planification dynamique;
un module de lecture (54) adapté pour la lecture du numéro de sous-trame de diffusion/multidiffusion SFN du canal de service de multidiffusion à partir de l'information de planification dynamique;
**caractérisé par** un premier module de détermination (56) adapté pour la détermination de la non-planification du canal de service de multidiffusion si le numéro de sous-trame de diffusion/multidiffusion SFN lu par le module de lecture (54) est une valeur spéciale, qui est une valeur au-delà des numéros de sous-trame de multidiffusion SFN disponibles,
où, lorsque la période de planification est de 2ⁿ x 320 ms, la valeur spéciale est une valeur au-delà de (6x2ⁿ x 32 -1), n ∈ [-5, N], n ≠ 0.

12. Un équipement utilisateur selon la revendication 11, comprenant également:
un deuxième module de détermination (58) adapté pour la détermination de la période de planification au cours de laquelle le canal de service de multidiffusion est planifié en fonction de la valeur spéciale correspondant au numéro de sous-trame de diffusion/multidiffusion SFN lu par le module de lecture (54), et pour l'acquisition des ressources de multidiffusion attribuées au canal de service de multidiffusion pendant la période de planification déterminée.
